(19) Europäisches Patentamt
European Patent Office
Office européen des brevets

(11) Veröffentlichungsnummer : **0 059 791**
**B1**

# (12) EUROPÄISCHE PATENTSCHRIFT

(45) Veröffentlichungstag der Patentschrift : **03.04.85**

(51) Int. Cl.$^4$ : **D 06 M 15/643**, C 08 L 83/04, C 09 D 3/82

(21) Anmeldenummer : **81109070.3**

(22) Anmeldetag : **28.10.81**

(54) **Verfahren zur Beschichtung von Unterlagen.**

(30) Priorität : **06.03.81 DE 3108595**

(43) Veröffentlichungstag der Anmeldung : **15.09.82 Patentblatt 82/37**

(45) Bekanntmachung des Hinweises auf die Patenterteilung : **03.04.85 Patentblatt 85/14**

(84) Benannte Vertragsstaaten : **AT BE CH DE FR GB IT LI NL**

(56) Entgegenhaltungen :
**DE-A- 1 469 327**
**DE-A- 2 459 806**
**US-A- 3 536 779**
**US-A- 4 154 714**
**PATENTS ABSTRACTS OF JAPAN, Band 3, Nr. 100(C-56), 24. August 1979, Seite 149C56, Tokyo, JP.**

(73) Patentinhaber : **WACKER-CHEMIE GMBH**
**Prinzregentenstrasse 22**
**D-8000 München 22 (DE)**

(72) Erfinder : **Marwitz, Heinrich, Dr., Dipl.-Chem.**
**Marienberger Strasse 48f**
**D-8263 Burghausen (DE)**
Erfinder : **Ullrich, Kurt**
**Bonifaz-Huber-Strasse 10**
**D-8263 Burghausen (DE)**
Erfinder : **Huhn, Karl, Dr., Dipl.-Chem.**
**Bachstrasse 16**
**D-8263 Burghausen (DE)**

EP 0 059 791 B1

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Beispielsweise aus US 4 154 714, ausgegeben 15. Mai 1979, F. Hockemeyer und Mitarbeiter, Wacker-Chemie GmbH, ist es bereits bekannt, Unterlagen, einschließlich gewebtem und ungewebtem Tuch aus natürlichen oder synthetischen Fasern, mit in den endständigen Einheiten je eine SiC-gebundene Vinylgruppe aufweisendem Diorganopolysiloxan, mindestens 3 Si-gebundene Wasserstoffatome je Molekül aufweisendem Organopolysiloxan und die Anlagerung von Si-gebundenem Wasserstoff an Vinylgruppen förderndem Katalysator aus Lösung in organischem Lösungsmittel zu beschichten. Im Gegensatz zu den bisher bekannten Beschichtungen dieser Art, welche die damit beschichteten Unterlagen abweisend gegenüber klebrigen Stoffen machen, verbinden die erfindungsgemäß hergestellten Beschichtungen hohe Wasserdichtigkeit mit hohem Ausmaß der Wasserabweisung und guter Abriebfestigkeit. Alle diese Eigenschaften bleiben auch beim Reinigen der beschichteten Unterlagen mit Wasser oder organischem Lösungsmittel erhalten.

Gegenstand der Erfindung ist ein Verfahren zur Beschichtung von Unterlagen, insbesondere textilen Flächengebilden, durch Auftragen einer Lösung auf die jeweils zu beschichtende Unterlage, wobei die Lösung in organischem Lösungsmittel enthält

(1) in den endständigen Einheiten je eine SiC-gebundene Vinylgruppe aufweisendes Diorganopolysiloxan der allgemeinen Formel

$$CH_2 = CHR_2SiO(SiR_2O)_nSiR_2CH = CH_2,$$

worin R gleiche oder verschiedene, von aliphatischen Mehrfachbindungen freie Kohlenwasserstoffreste bedeutet, die substituiert sein können und n eine ganze Zahl im Wert von mindestens 10 ist,

(2) mindestens 3 Si-gebundene Wasserstoffatome je Molekül aufweisendes Organopolysiloxan

(3) die Anlagerung von Si-gebundenem Wasserstoff an aliphatische Mehrfachbindung fördernder Katalysator und gegebenenfalls

(4) eine derartige Anlagerung bei Raumtemperatur verzögerndes oder verhinderndes Mittel,

und in bekannter Weise erfolgende Vernetzung vom Organopolysiloxan, dadurch gekennzeichnet, daß die Lösung zusätzlich zu organischem Lösungsmittel und den Bestandteilen (1) bis (3) und gegebenenfalls auch (4)

(5) Diorganopolysiloxan, worin bei 0,033 bis 3,33 % der Anzahl der Diorganosiloxaneinheiten je eine Vinylgruppe als organischer Rest an das Siliciumatom gebunden ist, während die übrigen organischen Reste in den Diorganosiloxaneinheiten dieses Diorganopolysiloxans frei von aliphatischen Mehrfachbindungen sind, mit einer Viskosität von mindestens $10^6$ mPa.s bei 25 °C und

(6) als Haftmittel geeignete Organosiliciumverbindung enthält und gegebenenfalls gleichzeitig in dieser Lösung oder vor dem Auftragen dieser Lösung (7) mindestens ein Polymer oder Mischpolymer von Acrylsäureester aufgetragen wird.

Die Zusammensetzung gemäß Patent Abstracts of Japan, Vol. 3, Nr. 100, Seite 149 C 56 (JP-A-1-54(79)80358), welche einen Klebstoff darstellt, was deutlicher als aus dem vorstehend genannten Referat aus dem Referat 91 : 212 295 d in Chemical Abstracts Vol. 91, 1979 hervorgeht, enthält keine Organopolysiloxane mit Vinylgruppen enthaltenden Diorganosiloxaneinheiten, wie es bei dem erfindungsgemäß verwendeten Bestandteil (5) der Fall ist.

Nach dem erfindungsgemäßen Verfahren können alle Unterlagen beschichtet werden, die auch bisher mit in den endständigen Einheiten je eine SiC-gebundene Vinylgruppe aufweisendem Diorganopolysiloxan, mindestens 3 Si-gebundene Wasserstoffatome je Molekül aufweisendem Organopolysiloxan und die Anlagerung von Si-gebundenem Wasserstoff an aliphatische Mehrfachbindung förderndem Katalysator aus Lösung in organischem Lösungsmittel beschichtet werden konnten. Beispiele für solche Unterlagen sind außer textilen Flächengebilden, auf die das erfindungsgemäße Verfahren bevorzugt angewandt wird, Papier, Pappe, einschließlich solcher aus Asbest, weiterhin Holz und Kork. Bei Papier kann es sich um minderwertige Papiersorten, wie saugfähige Papiere, oder hochwertige Papiersorten, wie holzfreie Papiere, handeln. Bei den textilen Flächengebilden kann es sich um solche aus natürlichen oder synthetischen Fasern handeln.

Beispiele für Fasern, aus denen die textilen Flächengebilde hergestellt sein können, sind solche aus Keratin, Baumwolle, Reyon, Hanf, natürlicher Seide, Polypropylen, Polyethylen, Polyester, Polyurethan, Polyamid, Celluloseacetat und Gemische aus solchen Fasern. Die Fasern können als Vliese, Matten, Gewebe, gestrickte oder gewirkte Textilien, einschließlich Kleidungsstücken bzw. Teilen von Kleidungsstücken, vorliegen. Besonders gut wasserdichte Beschichtungen werden bei dem erfindungsgemäßen Verfahren auf textilen Flächengebilden erzielt, die aus feinem Filamentgarn dicht gewebt sind, wie feiner Polyamid-Taft.

Beispiele für organische Lösungsmittel, die bei dem erfindungsgemäßen Verfahren eingesetzt werden können, sind insbesondere Ethylacetat, Isobutanol und Benzine, wie Alkangemische mit einem Siedebereich von 135 bis 180 °C bei 1 013 mbar (abs.), ferner andere Kohlenwasserstoffe als solche Alkane, wie Benzol, Toluol und Xylole, halogenierte Alkane mit 1 bis 6 Kohlenstoffatomen je Molekül, wie Methylenchlorid, Trichlorethylen und Perchlorethylen, Ether, wie Di-n-butylether, und Ketone, wie

Methylethylketon und Cyclohexanen, sowie Gemische aus mindestens zwei solcher Lösungsmittel, wie Gemische aus Ethylacetat und Isobutanol.

Vorzugsweise beträgt die Menge an Lösungsmittel 50 bis 80 Gewichtsprozent, bezogen auf das Gesamtgewicht der jeweils eingesetzten Lösung. Je höher der Anteil der Menge von Lösungsmittel am Gesamtgewicht der jeweils eingesetzten Lösung ist, um so höher sind das Ausmaß der Wasserdampfdurchlässigkeit und die Elastizität der Beschichtung. Ein hohes Ausmaß der Wasserdampfdurchlässigkeit kann z. B. bei Arbeitsschutzkleidung erwünscht sein.

Innerhalb bzw. entlang der Organopolysiloxankette der oben für Bestandteil (1) angegebenen Formel können, was bei derartigen Formeln üblicherweise nicht dargestellt wird, zusätzlich zu den Diorganosiloxaneinheiten, also den Einheiten der Formel $SiR_2O$, noch andere Siloxaneinheiten vorliegen. Beispiele für solche anderen, meist jedoch lediglich als Verunreinigungen vorliegenden Siloxaneinheiten sind insbesondere solche der Formeln $RSiO_{3/2}$, $R_3SiO_{1/2}$ und $SiO_{4/2}$, wobei R jeweils die oben dafür angegebene Bedeutung hat. Die Menge an solchen anderen Siloxaneinheiten beträgt vorzugsweise höchstens 1 Molprozent in den Molekülen von Diorganopolysiloxan (1).

Beispiele für die anderen SiC-gebundenen organischen Reste als die SiC-gebundenen Vinylgruppen in den Diorganopolysiloxanen (1) und somit auch für die Kohlenwasserstoffreste R in der oben angegebenen Formel sind Alkylreste, wie der Methyl-, Ethyl-, n-Propyl- und Isopropylrest sowie Butyl-, Octyl-, Tetradecyl- und Octadecylreste ; cycloaliphatische Kohlenwasserstoffreste, wie der Cyclopentyl- und Cyclohexylrest sowie Methylcyclohexylreste ; Arylreste, wie der Phenylrest ; Alkarylreste, wie Tolylreste ; und Aralkylreste, wie der Benzyl- und beta-Phenyl-ethylrest. Als Beispiele für substituierte Kohlenwasserstoffreste in den Diorganopolysiloxanen (1) seien halogenierte Kohlenwasserstoffreste, wie der 3,3,3-Trifluorpropylrest und o-, p- und m-Chlorphenylreste ; und Cyanalkylreste, wie der Cyanethylrest, genannt. Wegen der leichteren Zugänglichkeit sind vorzugsweise mindestens 90 % der Anzahl der anderen SiC-gebundenen organischen Reste als die SiC-gebundenen Vinylgruppen in den Diorganopolysiloxanen (1) und vor allem die von aliphatischen Mehrfachbindungen freien organischen Reste in den endständigen Einheiten der Diorganopolysiloxane (1) Methylreste.

Bei den Diorganopolysiloxanen (1) kann es sich um gleiche Mischpolymere oder um Gemische aus verschiedenen Mischpolymeren mit jeweils gleichem Polymerisationsgrad oder um Gemische aus gleichen oder verschiedenen Mischpolymeren gleichen oder verschiedenen Polymerisationsgrades handeln. Wenn die Diorganopolysiloxane (1) verschiedene Diorganosiloxaneinheiten enthalten, so können diese verschiedenen Einheiten in statistischer (random) Verteilung oder in Form von Blockmischpolymerisaten vorliegen.

Vorzugsweise haben die Diorganopolysiloxane (1) eine durchschnittliche Viskosität von 1 000 bis 30 000 mPa.s bei 25 °C, insbesondere 15 000 bis 25 000 mPa.s bei 25 °C.

Vorzugsweise wird Diorganopolysiloxan (1) in Mengen von 0,5 bis 6 Gewichtsprozent, bezogen auf das Gesamtgewicht der jeweiligen Lösung, eingesetzt.

Als mindestens 3 Si-gebundene Wasserstoffatome je Molekül aufweisende Organopolysiloxane (2) können auch bei dem erfindungsgemäßen Verfahren die gleichen mindestens 3 Si-gebundene Wasserstoffatome je Molekül aufweisenden, linearen oder cyclischen Organopolysiloxane verwendet werden, die bei allen bisher bekannten Verfahren zum Herstellen von Beschichtungen aus Vinylgruppen aufweisendem Organopolysiloxan, mindestens 3 Si-gebundene Wasserstoffatome je Molekül aufweisendem Organopolysiloxan und die Anlagerung von Si-gebundenem Wasserstoff an aliphatische Mehrfachbindung förderndem Katalysator einsetzbar sind.

In den mindestens 3 Si-gebundene Wasserstoffatome je Molekül aufweisenden Organopolysiloxanen (2) sind die nicht durch Wasserstoff- und Siloxansauerstoffatome abgesättigten Siliciumvalenzen vorzugsweise durch Methyl-, Ethyl- oder Phenylreste oder ein Gemisch aus mindestens zwei solcher Reste abgesättigt.

Bevorzugt als mindestens 3 Si-gebundene Wasserstoffatome je Molekül aufweisende Organopolysiloxane (2) sind solche der allgemeinen Formel

$$(CH_3)_3SiO(SiR'_2O)_pSi(CH_3)_3,$$

worin R' Wasserstoff oder gleiche oder verschiedene Reste mit der Bedeutung Methyl, Ethyl oder Phenyl und p eine ganze Zahl im Wert von 10 bis 500 bedeutet, mit der Maßgabe, daß an ein Si-Atom jeweils nur ein Wasserstoffatom gebunden ist und daß das Verhältnis von $R'_2SiO$-Einheiten, in denen beide R' Kohlenwasserstoffreste sind, zu den HR'SiO-Einheiten, in denen R' ein Kohlenwasserstoffrest ist, 3 : 1 bis 1 : 3 ist. Vorzugsweise bedeutet auch R' Methyl, wenn es nicht Wasserstoff ist.

Auch als mindestens 3 Si-gebundene Wasserstoffatome je Molekül aufweisende Organopolysiloxane (2) können gleiche oder verschiedene Moleküle dieser Organopolysiloxanart eingesetzt werden.

Mindestens 3 Si-gebundene Wasserstoffatome je Molekül aufweisendes Organopolysiloxan (2) wird vorzugsweise in Mengen von 0,4 bis 4 Gewichtsprozent, bezogen auf das Gesamtgewicht der jeweiligen Lösung, eingesetzt.

Mindestens 3 Si-gebundene Wasserstoffatome je Molekül aufweisendes Organopolysiloxan (2) enthält vorzugsweise mindestens 0,1 Gewichtsprozent Si-gebundenen Wasserstoff je Molekül dieser Organopolysiloxanart.

Als die Anlagerung von Si-gebundenem Wasserstoff an aliphatische Mehrfachbindung fördernde Katalysatoren (3) können im Rahmen des erfindungsgemäßen Verfahrens beliebige die Anlagerung von Si-gebundenem Wasserstoff an aliphatische Mehrfachbindung fördernde Katalysatoren verwendet werden. Beispiele für solche Katalysatoren sind metallisches feinverteiltes Platin, Rhutenium, Rhodium, Palladium und Iridium, wobei sich diese Metalle jeweils auf festen Trägern, wie Siliciumdioxyd, Aluminiumoxyd oder Aktivkohle, befinden können, und Verbindungen bzw. Komplexe dieser Elemente, wie $PtCl_4$, $H_2PtCl_6 \cdot 6H_2O$, $Na_2PtCl_4 \cdot 4H_2O$, Platin-Olefin-Komplexe, Platin-Alkohol- oder Platin-Alkoholat-Komplexe, Platin-Ether-Komplexe, Platin-Aldehyd-Komplexe, Platin-Keton-Komplexe, einschließlich Umsetzungsprodukten aus $H_2PtCl_6 \cdot 6H_2O$ und Cyclohexanon, Platin-Vinylsiloxan-Komplexe, insbesondere Platin-Divinyltetramethyldisiloxan-Komplexe mit oder ohne Gehalt an nachweisbarem anorganisch gebundenem Halogen, Bis-(gamma-picolin)-platindichlorid, Trimethylenpyridin-platindichlorid, Dicyclopentadienplatindichlorid und Dimethylsulfoxyd-ethylenplatin-(II)-dichlorid sowie ein Umsetzungsprodukt aus in 1-Octen gelöstem Platintetrachlorid mit sec.-Butylamin.

Platinverbindungen bzw. Platinkomplexe sind als die Anlagerung von Si-gebundenem Wasserstoff an aliphatische Mehrfachbindungen fördernde Katalysatoren (3) bevorzugt.

Es kann eine Art von die Anlagerung von Si-gebundenem Wasserstoff an aliphatische Mehrfachbindung förderndem Katalysator (3) verwendet werden. Es kann aber auch ein Gemisch aus mindestens zwei solcher Katalysatoren verwendet werden.

Wird als die Anlagerung von Si-gebundenem Wasserstoff an aliphatische Mehrfachbindung fördernder Katalysator (3) Platinverbindung bzw. Platinkomplex eingesetzt, so wird derartiger Katalysator vorzugsweise in Mengen von 0,05 bis 0,3 Gewichtsprozent, bezogen auf das Gesamtgewicht der jeweiligen Lösung und berechnet als elementares Platin, das im Verdünnungsmittel in einer Konzentration von 1 Gewichtsprozent vorliegt, bevor es in einer erfindungsgemäß eingesetzten Lösung eingesetzt wird, verwendet.

Damit die bei dem erfindungsgemäßen Verfahren eingesetzten Zusammensetzungen, die sowohl Organopolysiloxan mit SiC-gebundenen Vinylgruppen als auch Organopolysiloxan mit Si-gebundenem Wasserstoff und die Anlagerung von Si-gebundenem Wasserstoff an aliphatische Mehrfachbindung fördernden Katalysator enthalten, genügend beständig sind, können diese Zusammensetzungen mindestens ein die Anlagerung von Si-gebundenem Wasserstoff an aliphatische Mehrfachbindung bei Raumtemperatur verzögerndes oder verhinderndes Mittel (4) enthalten. Beispiele für derartige Mittel sind Acetylenalkohole, wie Ethinylcyclohexanol und 2-Methyl-3-butin-2-ol ; 1,3-Divinyl-1,1,3,3-tetramethyldisiloxan und Trichlorethylen.

Wird als die Anlagerung von Si-gebundenem Wasserstoff an aliphatische Mehrfachbindung bei Raumtemperatur verzögerndes oder verhinderndes Mittel (4) ein Acetylenalkohol verwendet, so vorzugsweise in Mengen von 0,02 bis 0,4 Gewichtsprozent, bezogen auf das Gesamtgewicht der jeweiligen Lösung.

Diorganopolysiloxan (5), worin bei 0,033 bis 3,33 % der Anzahl der Diorganosiloxaneinheiten je eine Vinylgruppe als organischer Rest an das Siliciumatom gebunden ist, während die übrigen organischen Reste in den Diorganosiloxaneinheiten dieses Diorganopolysiloxans frei von aliphatischen Mehrfachbindungen sind, mit einer Viskosität von mindestens $10^6$ mPa.s bei 25 °C ist vorzugsweise solches, das durch die allgemeine Formel

$$A_aR_{3-a}SiO[Si(CH{=}CH_2)RO]_n(SiR_2O)_mSiR_{3-a}A_a$$

wiedergegeben werden kann. In dieser Formel hat R die oben dafür angegebene Bedeutung, A ist eine Hydroxyl- oder Vinylgruppe, a ist 0 oder 1 und n und m sind ganze Zahlen, wobei das Verhältnis von m : n 30 : 1 bis 3 000 : 1 beträgt.

Auch hier können innerhalb bzw. entlang der Organopolysiloxankette zusätzlich zu den Diorganosiloxaneinheiten, also den Einheiten der Formel $SiR_2O$ und $Si(CH{=}CH_2)RO$, noch andere Siloxaneinheiten vorliegen. Beispiele für solche anderen, meist jedoch hier auch lediglich als Verunreinigungen vorliegenden Siloxaneinheiten sind auch hier insbesondere solche der Formeln $RSiO_{3/2}$, $R_3SiO_{1/2}$ und $SiO_{4/2}$, wobei R jeweils die oben dafür angegebene Bedeutung hat. Die Menge an solchen anderen Siloxaneinheiten beträgt vorzugsweise höchstens 1 Molprozent auch in den Molekülen von Diorganopolysiloxan (5).

Die oben angegebenen Beispiele für substituierte und unsubstituierte Kohlenwasserstoffreste R im Diorganopolysiloxan (1) gelten im vollen Umfang auch für von aliphatischen Mehrfachbindungen freie organische Reste im Diorganopolysiloxan (5). Vorzugsweise sind auch mindestens 90 % der Anzahl der von aliphatischen Mehrfachbindungen freien organischen Reste im Diorganopolysiloxan (5) Methylreste.

Vorzugsweise beträgt das Verhältnis von m : n 100 : 1 bis 300 : 1, so daß bei 0,33 bis 1 % der Diorganosiloxaneinheiten im Diorganopolysiloxan (5) je eine Vinylgruppe an das Siliciumatom als organischer Rest gebunden ist, während die übrigen organischen Reste in den Diorganosiloxaneinheiten dieses Diorganopolysiloxans frei von aliphatischen Mehrfachbindungen sind.

Auch bei den Diorganopolysiloxanen (5) kann es sich um gleiche Mischpolymere oder um Gemische aus verschiedenen Mischpolymeren mit jeweils gleichem Polymerisationsgrad oder um Gemische aus gleichen oder verschiedenen Mischpolymeren verschiedenen Polymerisationsgrades handeln. Die

verschiedenen Diorganosiloxaneinheiten der Diorganopolysiloxane (5) können in statistischer Verteilung oder in Form von Blockmischpolymerisaten vorliegen.

Vorzugsweise wird Diorganopolysiloxan (5) in Mengen von 4 bis 36 Gewichtsprozent, bezogen auf das Gesamtgewicht der jeweiligen Lösung, eingesetzt.

Beispiele für als Haftmittel geeignete Organosiliciumverbindungen (6) sind Silane mit hydrolysierbaren Resten und über Kohlenstoff an Silicium gebundenen Vinyl-, Acryloxy-, Methacryloxy, Epoxy- oder Aminogruppen, Teilhydrolysate solcher Silane und Umsetzungsprodukte aus Vinyltriacetoxysilan und dem Silan der Formel

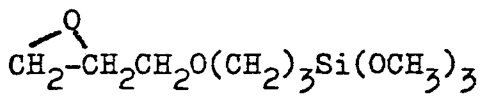

Derartige Umsetzungsprodukte sind bevorzugt.

Es kann eine Art von als Haftmittel geeigneter Organosiliciumverbindung verwendet werden. Es kann aber auch ein Gemisch aus mindestens zwei derartiger Haftmittel verwendet werden.

Vorzugsweise wird als Haftmittel geeignete Organosiliciumverbindung (6) in Mengen von 0,2 bis 2 Gewichtsprozent, bezogen auf das Gesamtgewicht der jeweiligen Lösung, eingesetzt.

Vorzugsweise wird Organopolysiloxanlösung mit Si-gebundenen Vinylgruppen getrennt von Organopolysiloxanlösung mit Si-gebundenem Wasserstoff aufbewahrt, um eine vorzeitige Vernetzung zu vermeiden.

Bei den Polymeren bzw. Mischpolymeren von Acrylsäureester kann es sich um solche, die vernetzbar oder nicht vernetzbar sind, handeln. Alle am Markt erhältlichen Arten von Polymeren oder Mischpolymeren von Acrylsäureester sind geeignet. Auch diese Polymeren bzw. Mischpolymeren werden vorzugsweise gelöst in einem organischen Lösungsmittel eingesetzt.

Zusätzlich zu den bisher genannten Bestandteilen der erfindungsgemäß verwendeten Beschichtungsmittel können gegebenenfalls weitere Stoffe mitverwendet werden. Beispiele für solche weiteren Stoffe sind Füllstoffe und Pigmente.

Das Auftragen der erfindungsgemäß verwendeten Zusammensetzung bzw. Zusammensetzungen auf die zu beschichtenden Unterlagen kann in beliebiger für die Herstellung von Überzügen aus flüssigen Stoffen geeigneter und vielfach bekannter Weise erfolgen, z. B. durch Tauchen, Streichen, Gießen, Sprühen, Aufwalzen, Drucken, Messer- oder Rakel-Beschichtung, einschließlich derjenigen mit einem Meyer-Stab (Meyer-rod), oder mittels einer Luftbürste.

Die Vernetzung vom Organopolysiloxan erfolgt durch Erwärmen, vorzugsweise bei Temperaturen von mindestens 110 °C, wobei gleichzeitig das organische Lösungsmittel bzw. Lösungsmittelgemisch verdampft. Temperaturen von 140° bis 160 °C während 5 bis 180 Sekunden sind bevorzugt. Anstatt daß erwärmt wird, oder in Verbindung mit Erwärmen kann die Vernetzung auch z. B. durch Ultraviolett-Licht bewirkt werden.

Bei einem Polyamid-Taft mit einem Gewicht von 60 g/m² reichen nur etwa 10 g/m² an trockener Beschichtung aus, um sehr gute Wasserdichtigkeit zu erzielen.

Erfindungsgemäß beschichtete textile Flächengebilde können außer der bereits oben erwähnten Arbeitsschutzkleidung auch z. B. Regen- oder Sportbekleidung sein.

Das in den folgenden Beispielen verwendete Gemisch aus Platin-komplex und Verdünnungsmittel wurde hergestellt wie folgt:

Zu einer Mischung aus 10 Gewichtsteilen $H_2PtCl_6 \cdot 6H_2O$, 20 Gewichtsteilen 1,3-Divinyl-1,1,3,3-tetramethyldisiloxan und 50 Gewichtsteilen Ethanol wurden 20 Teile Natriumbicarbonat gegeben. Das Gemisch wurde 30 Minuten unter Rühren zum Sieden unter Rückfluß erwärmt, dann 15 Stunden stehengelassen und danach filtriert. Aus dem Filtrat wurden bei etwa 16 mbar die flüchtigen Bestandteile abdestilliert. Der Rückstand wurde in Benzol gelöst. Die Lösung wurde filtriert und aus dem Filtrat das Benzol abdestilliert. Der Rückstand wurde in Vinyldimethylsiloxygruppen als endständige Einheiten aufweisendem Dimethylpolysiloxan mit einer Viskosität von 1 000 mPa.s bei 25 °C in solcher Menge gelöst, daß die Lösung 1 Gewichtsprozent Platin, berechnet als Element, enthält.

In den folgenden Beispielen beziehen sich alle Angaben von Teilen und Prozentsätzen auf das Gewicht, soweit nichts anderes angegeben ist.

### Beispiel 1

Eine Lösung von

17,0 Teilen eines Diorganopolysiloxans aus 99,5 Molprozent Dimethylsiloxaneinheiten und 0,5 Molprozent Vinylmethylsiloxaneinheiten mit einer Viskosität von weit über $10^6$ mPa.s bei 25 °C, nämlich mit einem im Brabender-Plastographen (Registriertes Warenzeichen) bei 25 °C und 60 Umdrehungen je Minute bestimmten Wert von 5 100 J (Ein Brabender-Plastograph ist z. B. in K. Frank « Prüfungsbuch für Kautschuk », Stuttgart, 1955 Seite 25 abgebildet).

8,5 Teilen eines Diorganopolysiloxans aus 99,95 Molprozent Dimethylsiloxaneinheiten und 0,05

Molprozent Vinylmethylsiloxaneinheiten mit einer Viskosität von weit über $10^6$ mPa.s nämlich einem im Brabender-Plastographen (Registriertes Warenzeichen) bei 25 °C und 60 Umdrehungen je Minute bestimmten Wert von 7 160 J,

4,5 Teilen eines Vinyldimethylsiloxyeinheiten als endständige Einheiten aufweisenden Dimethylpolysiloxans mit einer Viskosität von 20 000 mPa.s bei 25 °C,

2,8 Teilen eines durch Trimethylsiloxangruppen endblockierten Organopolysiloxans aus 75 Molprozent Dimethylsiloxaneinheiten und 25 Molprozent Methylhydrogeneinheiten mit einer Viskosität von 130 mPa.s bei 25 °C,

0,9 Teilen einer als Haftmittel geeigneten Organosiliciumverbindung, die durch 1 Stunde Erwärmen eines Gemisches aus 10 g Vinyltriacetoxysilan und 13 g des Silans der Formel

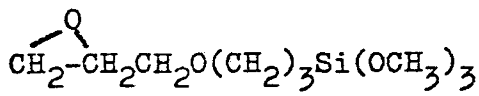

auf 200 °C hergestellt wurde,

0,2 Teilen des Gemisches aus Platinkomplex und Verdünnungsmittel, dessen Herstellung oben beschrieben wurde, und

0,1 Teilen Ethinylcyclohexanol

in

66,0 Teilen eines Alkangemisches mit einem Siedebereich von 135 bis 180 °C bei 1 013 mbar (abs.) wird mittels eines Rakelmessers zweimal auf dichtgewebten Polyamid-Taft (Filamentgewebe) mit einem Gewicht von 60 g/$m^2$ aufgetragen, wobei nach jedem Auftrag 45 Sekunden auf 150 °C erwärmt wird. Das Gewebe hat dann eine Auflage von 11 g/$m^2$.

Die Wasserdampfdurchlässigkeit des beschichteten Gewebes beträgt 239 g/d.$m^2$ nach DIN (Deutsche Industrie Norm) 53 122.

Der Wasserdichtwert des beschichteten Gewebes beträgt 1 000 mm Wassersäule nach DIN 53 886. Nach 5 Feinwäschen bei 30 °C in einer Haushaltwaschmaschine oder 5 maliger 20-Minuten-Behandlung mit Perchlorethylen, das als Zusätze 1 g/l eines Reinigungsverstärkers und 2 g/l Wasser enthält, ist dieser Wert immer noch unverändert.

Auch nachdem das beschichtete Gewebe 8 Tage einer gesättigten Wasserdampfatmosphäre bei 90 °C ausgesetzt wurde, ist keine Beeinträchtigung der Reibfestigkeit der Beschichtung festzustellen.

## Beispiel 2

Auf dichtgewebten Polyamid-Taft (Filamentgewebe) mit einem Gewicht von 60 g/$m^2$ wird zunächst eine 50 prozentige Lösung von vernetzbarem Harz auf Grundlage von Polyacrylsäureethylester (« Plexisol® BV 396 », Röhm GmbH) in einem Gemisch aus Ethylacetat und Isobutanol im Gewichtsverhältnis von 7 Teilen Ester und 3 Teilen Alkohol und dann die in Beispiel 1 beschriebene Lösung mittels des Rakelmessers aufgetragen. Nach jedem Auftrag wird 45 Sekunden auf 150 °C erwärmt. Das Gewebe hat dann eine Auflage von 16 g/$m^2$.

Die Wasserdampfdurchlässigkeit des beschichteten Gewebes beträgt 185 g/d.$m^2$ nach DIN 53 122.

Der Wasserdichtwert des beschichteten Gewebes beträgt 1 000 mm Wassersäule nach DIN 53 886. Nach 5 maliger 20-Minuten-Behandlung mit Perchlorethylen, das die in Beispiel 1 angegebenen Zusätze enthält, ist dieser Wert immer noch unverändert.

Auch nachdem das beschichtete Gewebe 8 Tage einer gesättigten Wasserdampfatmosphäre bei 90 °C ausgesetzt wurde, ist keine Beeinträchtigung der Reibfestigkeit der Beschichtung festzustellen.

## Beispiel 3

Auf dichtgewebten Polyamid-Taft (Filamentgewebe) mit einem Gewicht von 60 g/$m^2$ wird ein Gemisch aus gleichen Teilen der in Beispiel 2 näher beschriebenen Lösung von vernetzbarem Harz auf Grundlage von Polyacrylsäureethylester und der in Beispiel 1 beschriebenen Lösung mittels des Rakelmessers aufgetragen. Nach dem Auftragen wird 45 Sekunden auf 150 °C erwärmt. Das Gewebe hat dann eine Auflage von 8 g/m.

Der Wasserdichtwert des beschichteten Gewebes beträgt 1 000 mm Wassersäule nach DIN 53 886. Nach 3 Feinwäschen bei 30 °C in einer Haushaltswaschmaschine oder 3 mal 10-Minuten-Behandlung mit Perchlorethylen, das die in Beispiel 1 angegebenen Zusätze enthält, ist dieser Wert immer noch unverändert.

Auch nachdem das beschichtete Gewebe 8 Tage einer gesättigten Wasserdampfatmosphäre bei 90 °C ausgesetzt wurde, ist keine Beeinträchtigung der Reibfestigkeit der Beschichtung festzustellen.

## Beispiel 4

Die in Beispiel 1 beschriebene Arbeitsweise wird wiederholt mit der Abänderung, daß ein Polyester-Filamentgewebe mit einem Gewicht von 70 g/m² anstelle des Polyamid-Tafts verwendet wird. Das Gewebe hat dann eine Auflage von 17 g/m².

Der Wasserdichtwert des beschichteten Gewebes beträgt 1 000 mm Wassersäule nach DIN 53 886. Nach 5 Feinwäschen bei 30 °C in einer Haushaltswaschmaschine oder 5 maliger 10-Minuten-Behandlung mit Perchlorethylen, das die in Beispiel 1 angegebenen Zusätze enthält, ist dieser Wert immer noch unverändert.

Auch nachdem das beschichtete Gewebe 8 Tage einer gesättigten Wasserdampfatmosphäre bei 90 °C ausgesetzt wurde, ist keine Beeinträchtigung der Reibfestigkeit der Beschichtung festzustellen.

Beispiel 5

Eine Lösung von

14,3 Teilen des Diorganopolysiloxans aus 99,5 Molprozent Dimethylsiloxaneinheiten und 0,5 Molprozent Vinylmethylsiloxaneinheiten mit dem im Brabender-Plastographen (Registriertes Warenzeichen) bei 25 °C und 60 Umdrehungen je Minute bestimmten Wert von 5 100 J,

7,1 Teilen des Diorganopolysiloxans aus 99,95 Molprozent Dimethylsiloxaneinheiten mit dem im Brabender-Plastographen bei 25 °C und 60 Umdrehungen je Minute bestimmten Wert von 7 160 J,

3,8 Teilen des Vinyldimethylsiloxyeinheiten als endständige Einheiten aufweisenden Dimethylpolysiloxans mit einer Viskosität von 20 000 mPa.s bei 25 °C,

2,3 Teilen des durch Trimethylsiloxygruppen endblockierten Organopolysiloxans aus 75 Molprozent Dimethylsiloxaneinheiten und 25 Molprozent Methylhydrogensiloxaneinheiten mit einer Viskosität von 130 mPa.s bei 25 °C,

0,8 Teilen der als Haftmittel geeigneten Organosiliciumverbindung, deren Herstellung in Beispiel 1 beschrieben wurde,

0,2 Teilen des Gemisches aus Platinkomplex und Verdünnungsmittel, dessen Herstellung oben beschrieben wurde,

0,1 Teilen Ethinylcyclohexanol

in

71,4 Teilen des Alkangemisches mit einem Siedebereich von 135 bis 180 °C bei 1 013 mbar (abs.)

wird mittels eines Rakelmessers einmal auf Baumwoll/Polyester-(50/50)-Mischgewebe mit einem Gewicht von 220 g/m², wie es zur Herstellung von Arbeitsschutzkleidung verwendet wird, aufgetragen. Dann wird 45 Sekunden auf 150 °C erwärmt. Das Gewebe hat dann eine Auflage von 25 g/m².

Das beschichtete Gewebe hat gute Luftdurchlässigkeit.

Der Wasserdichtwert des beschichteten Gewebes beträgt 250 mm Wassersäule nach DIN 53 886. Nach 5 Feinwäschen bei 30 °C in einer Haushaltswaschmaschine oder nach 5 maliger 10-Minuten-Behandlung mit Perchlorethylen beträgt der Wasserdichtwert noch 200 mm Wassersäule nach DIN 53 886.

Die in den obigen Beispielen 1 bis 5 verwendeten Diorganopolysiloxane mit einer Viskosität von mehr als $10^6$ mPa.s bei 25 °C sind jeweils durch Trimethylsiloxygruppen endblockiert.

**Ansprüche**

1. Verfahren zur Beschichtung von Unterlagen, insbesondere textilen Flächengebilden, durch Auftragen einer Lösung auf die jeweils zu beschichtende Unterlage, wobei die Lösung in organischem Lösungsmittel enthält

(1) in den endständigen Einheiten je eine SiC-gebundene Vinylgruppe aufweisendes Diorganopolysiloxan der allgemeinen Formel

$$CH_2 = CHR_2SiO(SiR_2O)_nSiR_2CH = CH_2,$$

worin R gleiche oder verschiedene, von aliphatischen Mehrfachbindungen freie Kohlenwasserstoffreste bedeutet, die substituiert sein können und n eine ganze Zahl im Wert von mindestens 10 ist,

(2) mindestens 3 Si-gebundene Wasserstoffatome je Molekül aufweisendes Organopolysiloxan

(3) die Anlagerung von Si-gebundenem Wasserstoff an aliphatische Mehrfachbindung fördernder Katalysator und gegebenenfalls

(4) eine derartige Anlagerung bei Raumtemperatur verzögerndes oder verhinderndes Mittel,

und in bekannter Weise erfolgende Vernetzung vom Organopolysiloxan, dadurch gekennzeichnet, daß die Lösung zusätzlich zu organischem Lösungsmittel und den Bestandteilen (1) bis (3) und gegebenenfalls auch (4)

(5) Diorganopolysiloxan, worin bei 0,033 bis 3,33 % der Anzahl der Diorganosiloxaneinheiten je eine Vinylgruppe als organischer Rest an das Siliciumatom gebunden ist, während die übrigen organischen Reste in den Diorganosiloxaneinheiten dieses Diorganopolysiloxans frei von aliphatischen Mehrfachbindungen sind, mit einer Viskosität von mindestens $10^6$ mPa.s bei 25 °C und

(6) als Haftmittel geeignete Organosiliciumverbindung enthält und gegebenenfalls gleichzeitig in dieser Lösung oder vor dem Auftragen dieser Lösung (7) mindestens ein Polymer oder Mischpolymer von Acrylsäureester aufgetragen wird.

2. Verfahren nach Anspruch 1, dadurch gekennzeichnet, daß bei 0,33 bis 1 % der Diorganosiloxaneinheiten im Diorganopolysiloxan (5) je eine Vinylgruppe an das Siliciumatom als organischer Rest gebunden ist, während die übrigen organischen Reste in den Diorganosiloxaneinheiten dieses Diorganopolysiloxans frei von aliphatischen Mehrfachbindungen sind.

3. Verfahren nach Anspruch 1 oder 2, dadurch gekennzeichnet, daß Diorganopolysiloxan (5) in Mengen von 4 bis 36 Gewichtsprozent, bezogen auf das Gesamtgewicht der jeweiligen Lösung, eingesetzt wird.

4. Verfahren nach mindestens einem der Ansprüche 1 bis 3, dadurch gekennzeichnet, daß als Haftmittel geeignete Organosiliciumverbindung (6) mindestens ein Umsetzungsprodukt aus Vinyltriacetoxysilan und dem Silan der Formel

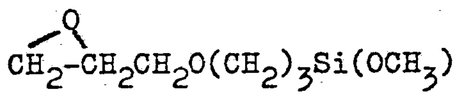

eingesetzt wird.

## Claims

1. Process for coating substrates, especially articles of textile sheets, by applying a solution to the substrate to be coated, the solution in an organic solvent containing

(1) a diorganopolysiloxane, having an SiC-bonded vinyl group in each terminal unit, of the general formula

$$CH_2 = CHR_2SiO(SiR_2O)_nSiR_2CH = CH_2,$$

in which R represents the same or different hydrocarbon radicals that are free of aliphatic multiple bonds and that may be substituted, and n represents an integer of at least 10,

(2) an organopolysiloxane having at least 3 Si-bonded hydrogen atoms per molecule,

(3) a catalyst that promotes the addition of Si-bonded hydrogen to aliphatic multiple bonds and, optionally,

(4) an agent that delays or prevents such addition at room temperature,

and by cross-linking the organopolysiloxane in known manner, characterised in that, in addition to the organic solvent and the constituents (1) to (3) and, optionally (4), the solution also contains

(5) a diorganopolysiloxane, having a viscosity of at least $10^6$ mPa.s at 25 °C, in which from 0.033 to 3,33 % by number of diorganosiloxane units includes, as an organic radical, a vinyl group bonded to the silicon atom, with the remaining organic radicals in the diorganosiloxane units of this diorganopolysiloxane being free of aliphatic multiple bonds, and

(6) an organosilicon compound that is suitable as an adhesive,

and optionally also applying, either simultaneously in the said solution or prior to application of the said solution,

(7) at least one polymer or copolymer of an acrylic acid ester.

2. Process according to claim 1, characterised in that, in the diorganopolysiloxane (5), from 0.33 to 1 % of the diorganosiloxane units includes, as an organic radical, a vinyl group bonded to the silicon atom, with the remaining organic radicals in the diorganosiloxane units of this diorganopolysiloxane being free of aliphatic multiple bonds.

3. Process according to claim 1 or 2, characterised in that the diorganopolysiloxane (5) is used in amounts of from 4 to 36 per cent by weight, based on the total weight of the particular solution.

4. Process according to at least one of claims 1 to 3, characterised in that at least one reaction product of vinyltriacetoxysilane and the silane of the formula

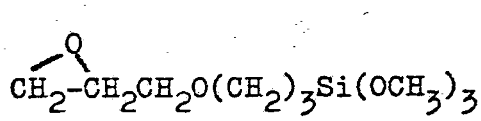

is used as the organosilicon compound (6) that is suitable as an adhesive.

**Revendications**

1. Procédé d'enduction (revêtement) de subjectiles, en particulier d'articles textiles planiformes, par application d'une solution dans un solvant organique comprenant :

(1) un diorganopolysiloxane qui a un groupe vinylique lié au silicium dans chaque motif terminal de formule générale

$$CH_2 = CHR_2SiO(SiR_2O)_nSiR_2CH = CH_2$$

R désignant des radicaux hydrocarbonés identiques ou différents sans liaisons multiples aliphatiques, qui peuvent avoir des substituants, et n un entier au moins égal à 10,

(2) un organopolysiloxane ayant par molécule au moins trois atomes d'hydrogène liés au silicium,

(3) un catalyseur activant la fixation de l'hydrogène lié au silicium sur les doubles liaisons aliphatiques, et le cas échéant,

(4) un agent retardant ou empêchant cette fixation à la température ordinaire,

et réticulation de manière connue de l'organopolysiloxane, procédé caractérisé en ce que cette solution, en plus du solvant et des constituants 1) à 3) ci-dessus, et le cas échéant du constituant 4), contient également

(5) un diorganopolysiloxane dans lequel, pour 0,033 à 3,33 % du nombre des motifs de diorganosiloxane, dans chaque motif un groupe vinylique est lié comme radical organique à l'atome de silicium, tandis que les radicaux organiques des autres motifs de diorganosiloxane n'ont pas de liaisons multiples aliphatiques, ce diorganopolysiloxane ayant une viscosité d'au moins $10^6$ mPa.s à la température de 25 °C, et

(6) un composé organique du silicium comme agent adhésif,

et le cas échéant on applique en même temps, dans cette solution, ou avant d'appliquer celle-ci (7) un ou plusieurs polymères ou copolymères d'esters de l'acide acrylique.

2. Procédé selon la revendication 1 caractérisé en ce que pour 0,33 à 1 % des motifs diorganosiloxanes du diorganopolysiloxane (5), dans chacun de ces motifs un groupe vinylique est lié comme radical organique à l'atome de silicium, tandis que les radicaux organiques des autres motifs diorganosiloxanes de ce diorganopolysiloxane n'ont pas de liaisons multiples aliphatiques.

3. Procédé selon la revendication 1 ou 2, caractérisé en ce que la proportion du diorganopolysiloxane (5) est de 4 à 36 % du poids total de la solution.

4. Procédé selon l'une quelconque des revendications 1 à 3, caractérisé en ce que l'on utilise comme composé organosilicique (6) servant d'adhésif un produit de réaction du vinyl-triacétoxysilane avec le silane de formule